(19) **Europäisches Patentamt**
**European Patent Office**
**Office européen des brevets**

(11) **EP 4 099 223 A1**

(12) **EUROPEAN PATENT APPLICATION**
published in accordance with Art. 153(4) EPC

(43) Date of publication:
**07.12.2022 Bulletin 2022/49**

(21) Application number: **20916689.1**

(22) Date of filing: **24.07.2020**

(51) International Patent Classification (IPC):
**G06N 3/04** *(2006.01)* **G06N 3/063** *(2006.01)*

(52) Cooperative Patent Classification (CPC):
**G06N 3/04; G06N 3/063**

(86) International application number:
**PCT/KR2020/009823**

(87) International publication number:
**WO 2021/153864 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.01.2020 KR 20200009615**

(71) Applicant: **Deep Bio Inc.**
**Seoul 08394 (KR)**

(72) Inventors:
• **PAIK, In Young**
**Seoul 03680 (KR)**
• **OH, Sang Jun**
**Seoul 08515 (KR)**
• **KWAK, Tae Yeong**
**Seoul 05119 (KR)**

(74) Representative: **Flügel Preissner Schober Seidel**
**Patentanwälte PartG mbB**
**Nymphenburger Straße 20**
**80335 München (DE)**

(54) **METHOD FOR OVERCOMING CATASTROPHIC FORGETTING THROUGH NEURON-LEVEL PLASTICITY CONTROL, AND COMPUTING SYSTEM PERFORMING SAME**

(57) A simple, effective, and novel solution called neuron-level plasticity control (NPC) is proposed in order to solve the issue of catastrophic forgetting in an artificial neural network. The proposed method controls the plasticity of a network at a nerve level rather than at a connection level during training of a new task, thereby conserving existing knowledge. The neuron-level plasticity control evaluates the importance of each neuron and applies a low training speed to integrate important neurons. In addition, an extension of NPC, called scheduled NPC (SNPC), is proposed. This extension uses training schedule information to more clearly protect important neurons. Results of experiments on incremental MNIST (iMNIST) and incremental CIFAR100 data sets show that NPC and SNPC are remarkably effective in comparison to connection-level integrated access methods, and in particular, SNPC exhibits excellent performance for the two data sets.

FIG. 7

f: neural network model
$n_i$: i-th neuron in f
$w_{ji}$: weight of connection $n_j \rightarrow n_i$
$n_{max}$: upper bound of learning rate
$\alpha$, $\beta$: hyperparameters
$C_i$: importance of i-th neuron

$t = 1; \ C_i = 0, \ \forall i$ ~S100

**for** *input, label* **in** training dataset **do** ~S200

$y \leftarrow f(input)$ ~S210

$L \leftarrow CrossEntropy(y, label)$ ~S220

**for** $n_i$ **in** $f$ **do** ~S230

$c_i \leftarrow \underset{batch}{average} |n_i \frac{dL}{dn_i}|$ ~S231

$\hat{c}_i \leftarrow c_i / \sqrt{\sum_{layer} (c_i)^2 / N_{layer}}$ ~S232

$C_i \leftarrow \delta C_i + (1 - \delta) \hat{c}_i$ ~S233

$\eta_i \leftarrow min(\eta_{max}, \alpha \ max(\sqrt{\frac{\beta}{tC_i}} - 1, 0))$ ~S234

$w_{ji} \leftarrow w_{ji} - \eta_i \frac{dL}{dw_i}, \forall j$ ~S235

$t \leftarrow t + 1$ ~S240

EP 4 099 223 A1

**Description**

**TECHNICAL FIELD**

In order to solve the issue of catastrophic forgetting in an artificial neural network, a simple, effective, and novel solution called neuron-level plasticity control (NPC) is proposed.

**BACKGROUND ART**

In the process of realizing artificial general intelligence using a deep neural network, catastrophic forgetting is still one of the most fundamental challenges. The gradient descent, which is the most frequently used learning algorithm, generates problems when it is applied to train a neural network for multiple tasks in a sequential manner. When the gradient descent optimizes the neural network for a current task, knowledge about previous tasks is catastrophically overwritten by new knowledge.

After the initial discovery of the problem [McCloskey Cohen (1989) McCloskey and Cohen], various approaches have been proposed to alleviate catastrophic forgetting in artificial neural networks. One of the approaches is to include data for multiple tasks in all mini-batches. Although such a method may be effective in maintaining performance of previous tasks, an overhead of maintaining training data for the previous tasks is generated. Several attempts have been made to achieve a similar effect using only a limited part of previous data [Gepperth Karaoguz (2016) Gepperth and Karaoguz, Lopez-Paz (2017)] or without using previous data [Li Hoiem (2018) Li and Hoiem, Shin et al. (2017) Shin, Lee, Kim, and Kim, Kamra et al. (2017) Kamra, Gupta, and Liu, Zacarias Alexandre (2018) Zacarias and Alexandre, Kim et al. (2018) Kim, Kim, and Lee].

Another approach is to isolate a part of a neural network that contains previous knowledge, and learn a new task using the other parts of the network. This includes designing dynamic architectures for neural networks that may learn new tasks by assigning different parts of the network to the new tasks. [Fernando et al. (2017) Fernando, Banarse, Blundell, Zwols, Ha, Rusu, Pritzel, and Wierstra, Aljundi et al. (2017) Aljundi, Chakravarty, and Tuytelaars, Lee et al. (2017) Lee, Yun, Hwang, and Yang] Since the proposed algorithm learns multiple tasks using the other parts of the network, the present invention is closely related to this approach. Here, the unit of a part is an individual neuron.

Elastic weight consolidation (EWC) [Kirkpatrick et al. (2017) Kirkpatrick, Pascanu, Rabinowitz, Veness, Desjardins, Rusu, Milan, Quan, Ramalho, Grabska-Barwinska, et al.] is a notable development made in this field. Using diagonal lines of a Fisher information matrix, EWC identifies and consolidates parameters corresponding to connection weights of neural networks important to previous tasks. In this way, a network may learn new tasks using less important parameters while maintaining previously learned knowledge. As the EWC has attracted much attention, it has been adopted in many studies [Lee et al. (2017) Lee, Kim, Jun, Ha, Zhang, Nguyen et al. (2017) Nguyen, Li, Bui, and Turner, Liu et al. (2018) Liu, Masana, Herranz, Van to de Weijer, Lopez and Bagdanov, Zenke et al. (2017) Zenke, Poole, Ganguli]. There is a significant room for improvement in the performance of the EWC alone [Parisi et al. (2018) Parisi, Kemker, Part, Kanan, Wermter]. In recent studies, EWC has been used in combination with other methods as a means for normalization [Kim et al. (2018) Kim, Kim, and Lee, Lee et al. (2017) Lee, Yun, Hwang, and Yang].

Prior art documents

Non-patent documents

**References**

[Aljundi et al. (2017) Aljundi, Chakravarty, and Tuytelaars] Aljundi, R., Chakravarty, P., and Tuytelaars, T. Expert gate: Lifelong learning with a network of experts. pp. 3366-3375, 2017.

[De~Vries et al. (2017) De~Vries, Strub, Mary, Larochelle, Pietquin, and Courville] De Vries, H., Strub, F., Mary, J., Larochelle, H., Pietquin, O., and Courville, A. C. Modulating early visual processing by language. pp. 6594-6604, 2017.

[Fernando et al. (2017) Fernando, Banarse, Blundell, Zwols, Ha, Rusu, Pritzel, and Wierstra] Fernando, C., Banarse, D., Blundell, C., Zwols, Y., Ha, D., Rusu, A. A., Pritzel, A., and Wierstra, D. PathNet: Evolution channels gradient descent in super neural networks. arXiv preprint arXiv:1701.08734, 2017.

[Gepperth Karaoguz (2016) Gepperth and Karaoguz] Gepperth, A. and Karaoguz, C. A bio-inspired incremental learning architecture for applied perceptual problems. Cognitive Computation, 80 (5):0 924-934, 2016.

[He et al. (2016) He, Zhang, Ren, and Sun] He, K., Zhang, X., Ren, S., and Sun, J. Deep residual learning for image recognition. pp. 770-778, 2016.

[Ioffe Szegedy (2015) Ioffe and Szegedy] Ioffe, S. and Szegedy, C. Batch normalization: Accelerating deep network training by reducing internal covariate shift. arXiv preprint arXiv:1502.03167, 2015.

[Kamra et al. (2017) Kamra, Gupta, and Liu] Kamra, N., Gupta, U., and Liu, Y. Deep generative dual memory network for continual learning. arXiv preprint arXiv:1710.10368, 2017.

[Kim et al. (2018) Kim, Kim, and Lee] Kim, H.-E., Kim, S., and Lee, J. Keep and learn: Continual learning by constraining the latent space for knowledge preservation in neural networks. arXiv preprint arXiv:1805.10784, 2018.

[Kirkpatrick et al. (2017) Kirkpatrick, Pascanu, Rabinowitz, Veness, Desjardins, Rusu, Milan, Quan, Ramalho, Grabska-Barwinska, et al.] Kirkpatrick, J., Pascanu, R., Rabinowitz, N., Veness, J., Desjardins, G., Rusu, A. A., Milan, K., Quan, J., Ramalho, T., Grabska-Barwinska, A., et al. Overcoming catastrophic forgetting in neural networks. Proceedings of the national academy of sciences, pp. 201611835, 2017.

[Krizhevsky Hinton (2009) Krizhevsky and Hinton] Krizhevsky, A. and Hinton, G. Learning multiple layers of features from tiny images. 2009.

[LeCun et al. (1998) LeCun, Bottou, Bengio, and Haffner] LeCun, Y., Bottou, L., Bengio, Y., and Haffner, P. Gradient-based learning applied to document recognition. Proceedings of the IEEE, 860 (11):0 2278-2324, 1998.

[Lee et al. (2017) Lee, Yun, Hwang, and Yang] Lee, J., Yun, J., Hwang, S., and Yang, E. Lifelong learning with dynamically expandable networks. arXiv preprint arXiv:1708.01547, 2017 a.

[Lee et al. (2017) Lee, Kim, Jun, Ha, and Zhang] Lee, S.-W., Kim, J.-H., Jun, J., Ha, J.-W., and Zhang, B.-T. Overcoming catastrophic forgetting by incremental moment matching. pp. 4652-4662, 2017 b.

[Liu et al. (2018) Liu, Masana, Herranz, Van~de Weijer, Lopez, and Bagdanov] Liu, X., Masana, M., Herranz, L., Van de Weijer, J., Lopez, A. M., and Bagdanov, A. D. Rotate your networks: Better weight consolidation and less catastrophic forgetting. arXiv preprint arXiv:1802.02950, 2018.

[Li Hoiem (2018) Li and Hoiem] Li, Z. and Hoiem, D. Learning without forgetting. IEEE Transactions on Pattern Analysis and Machine Intelligence, 400 (12):0 2935-2947, 2018.

[Lopez-Paz (2017)] Lopez-Paz, D. Gradient episodic memory for continual learning. Advances in Neural Information Processing Systems, pp. 6467-6476, 2017.

[Luo Wu (2017) Luo and Wu] Luo, J.-H. and Wu, J. An entropy-based pruning method for cnn compression. arXiv preprint arXiv:1706.05791, 2017.

[Luo et al. (2017) Luo, Wu, and Lin] Luo, J.-H., Wu, J., and Lin, W. Thinet: A filter level pruning method for deep neural network compression. pp. 5068-5076, 2017.

[McCloskey Cohen (1989) McCloskey and Cohen] McCloskey, M. and Cohen, N. J. Catastrophic interference in connectionist networks: The sequential learning problem. 24:0 109-165, 1989.

[Mermillod et al. (2013) Mermillod, Bugaiska, and Bonin] Mermillod, M., Bugaiska, A., and Bonin, P. The stability-plasticity dilemma: Investigating the continuum from catastrophic forgetting to age-limited learning effects. Frontiers in psychology, 4:0 504, 2013.

[Molchanov et al. (2016) Molchanov, Tyree, Karras, Aila, and Kautz] Molchanov, P., Tyree, S., Karras, T., Aila, T., and Kautz, J. Pruning convolutional neural networks for resource efficient inference. arXiv preprint arXiv:1611.06440, 2016.

[Nguyen et al. (2017) Nguyen, Li, Bui, and Turner] Nguyen, C. V., Li, Y., Bui, T. D., and Turner, R. E. Variational continual learning. arXiv preprint arXiv:1710.10628, 2017.

[Parisi et al. (2018) Parisi, Kemker, Part, Kanan, and Wermter] Parisi, G. I., Kemker, R., Part, J. L., Kanan, C., and Wermter, S. Continual lifelong learning with neural networks: A review. arXiv preprint arXiv:1802.07569, 2018.

[Real et al. (2018) Real, Aggarwal, Huang, and Le] Real, E., Aggarwal, A., Huang, Y., and Le, Q. V. Regularized evolution for image classifier architecture search. arXiv preprint arXiv:1802.01548, 2018.

[Salimans et al. (2016) Salimans, Goodfellow, Zaremba, Cheung, Radford, and Chen] Salimans, T., Goodfellow, I., Zaremba, W., Cheung, V., Radford, A., and Chen, X. Improved techniques for training GANs. pp. 2234-2242, 2016.

[Shin et al. (2017) Shin, Lee, Kim, and Kim] Shin, H., Lee, J. K., Kim, J., and Kim, J. Continual learning with deep generative replay. pp. 2990-2999, 2017.

[Simonyan Zisserman (2014) Simonyan and Zisserman] Simonyan, K. and Zisserman, A. Very deep convolutional networks for large-scale image recognition. arXiv preprint arXiv:1409.1556, 2014.

[Ulyanov et al. (2016) Ulyanov, Vedaldi, and Lempitsky] Ulyanov, D., Vedaldi, A., and Lempitsky, V. Instance normalization: The missing ingredient for fast stylization. arXiv preprint arXiv:1607.08022, 2016.

[Wikipedia contributors (2018)] Wikipedia contributors. Error function - Wikipedia, the free encyclopedia, 2018. URL https://en.wikipedia.org/wiki/Error_function. [Online; accessed 23-Jan-2019].

[Yu et al. (2018) Yu, Li, Chen, Lai, Morariu, Han, Gao, Lin, and Davis] Yu, R., Li, A., Chen, C.-F., Lai, J.-H., Morariu, V. I., Han, X., Gao, M., Lin, C.-Y., and Davis, L. S. NISP: Pruning networks using neuron importance score propagation. pp. 9194-9203, 2018.

[Zacarias Alexandre (2018) Zacarias and Alexandre] Zacarias, A. S. and Alexandre, L. A. Overcoming catastrophic forgetting in convolutional neural networks by selective network augmentation. arXiv preprint arXiv:1802.08250, 2018.
[Zenke et al. (2017) Zenke, Poole, and Ganguli] Zenke, F., Poole, B., and Ganguli, S. Continual learning through synaptic intelligence. arXiv preprint arXiv:1703.04200, 2017.

## DISCLOSURE OF INVENTION

### TECHNICAL PROBLEM

The present invention shows the limitation of the EWC and proposes an improved algorithm called neuron-level plasticity control (NPC). As is known from the name, NPC maintains existing knowledge by controlling plasticity of each neuron or each filter in a Convolutional Neural Network (CNN). This is in contrast to the EWC, which works by consolidating individual connection weights. Another important characteristic of the NPC is to stabilize important neurons by adjusting the learning rates, rather than maintaining important parameters to be close to a specific value. Such a characteristic may increase efficiency of memory, in addition to increasing the efficiency of the NPC, regardless of the number of tasks. That is, since the NPC only needs to store a single importance value per neuron, instead of a set of parameter values for each task, the amount of memory use may be consistently maintained regardless of the number of tasks.

Previous studies generally assume that an accurate timing of task switching is known. Accordingly, the learning algorithm may explicitly maintain and switch contexts, such as several sets of parameter values, whenever a task changes. On the other hand, NPC controls plasticity of neurons by continuously evaluating importance of each neuron without maintaining information and simply adjusting the learning rate according to the moving average of the importance. Therefore, NPC does not require information about the learning schedule, except the identifier (ID) of the current task, which is essentially needed to compute classification loss. On the other hand, NPC may be further improved when there is a predetermined learning schedule. To this end, an extension of NPC referred to as a scheduled NPC (SNPC) is proposed to more clearly preserve important neurons according to a learning schedule. For each task, SNPC identifies and consolidates important neurons while training other tasks. Experiment results show that NPC and SNPC are practically more effective in reducing catastrophic forgetting than the connection-level consolidation approach. In particular, the effect of catastrophic forgetting almost disappears in the evaluation of SNPC on the iMNIST dataset.

### TECHNICAL SOLUTION

There is provided a method of overcoming catastrophic forgetting through neuron-level plasticity control (NPC).
There is provided a computing system for performing the method of overcoming catastrophic forgetting through neuron-level plasticity control (NPC).

### ADVANTAGEOUS EFFECTS

Results of experiments on incremental MNIST (iMNIST) and incremental CIFAR100 datasets show that NPC and SNPC are remarkably effective in comparison with connection-level integrated access methods, and in particular, SNPC exhibits excellent performance for the two datasets.

### BRIEF DESCRIPTION OF THE DRAWINGS

FIG. 1 is a view for comparing connection-level consolidation and neuron-level consolidation. FIG. 1(a) shows neurons and connections important for Task 1. FIG. 1(b) shows connection-level consolidation. Although important connections are consolidated, neurons may be affected by other incoming connections that may change while learning Task 2. FIG. 1(c) shows neuron-level consolidation. NPC consolidates all incoming connections of important neurons, which are more effective in preserving knowledge of the neurons.
FIG. 2 shows an example of a histogram of importance values Ci. FIG. 2(a) is an original distribution before equalization, and FIG. 2(b) is an equalized distribution.
FIG. 3 shows verification accuracy of the continual learning algorithm on an iMNIST dataset. FIG. 3(a) shows average verification accuracy of tasks trained up to each moment, and FIG. 3(b) shows training curves of five tasks according to the learning algorithm. SNPC and NPC respectively show the best performance among continual learning algorithms.

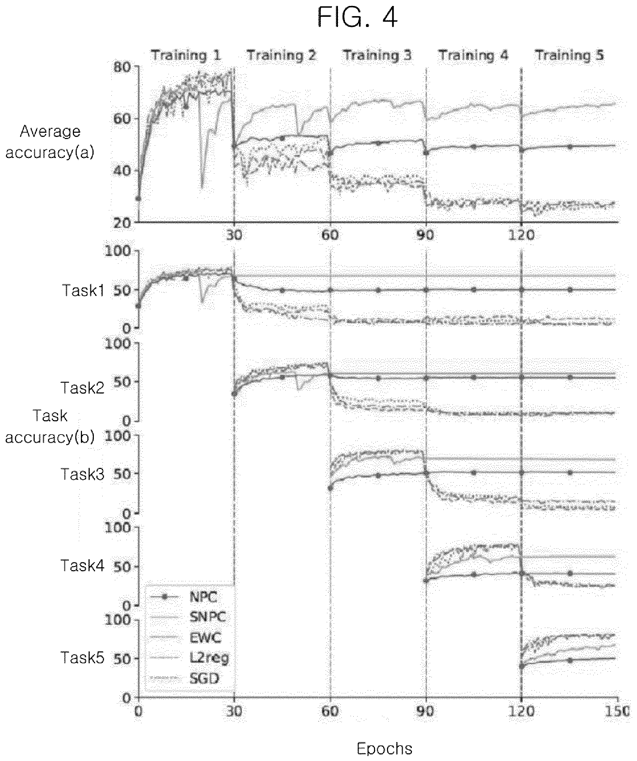

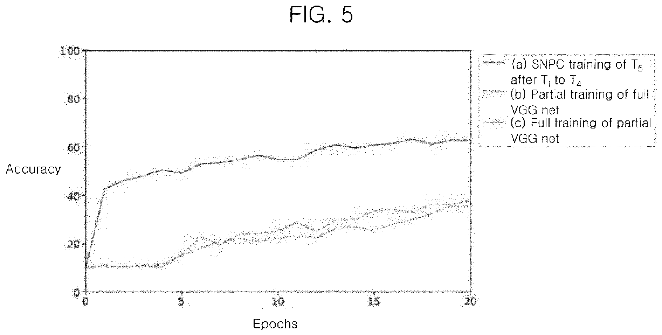

FIG. 4 shows validity verification accuracy of the continual learning algorithm on an iCIFAR100 dataset. FIG. 4(a) shows average verification accuracy of a task trained up to each moment, and FIG. 4(b) shows training curves of five tasks according to the learning algorithm. SNPC and NPC respectively show the best performance among continual learning algorithms. Difference between training curves is more remarkable in iCIFAR100 than in iMNIST. FIG. 5 shows training curves of the fifth iCIFAR100 task under different settings. FIG. 5(a) shows a training curve of SNPC learning $T_5$ after learning $T_1$ to $T_4$, and FIG. 5(b) shows a training curve of partial training of a full VGG net, in which only 14.33% (= $r_5$) of neurons are allowed to change from randomly initialized parameters, and FIG. 5(c) shows a training curve of training of a partial VGG net, starting from randomly initialized parameters and reduced only to have 14.33% of the original model.

FIG. 6 is a block diagram showing a schematic configuration of a computing system according to an embodiment of the present invention.

FIG. 7 is a flowchart illustrating a neuron-level plasticity control method performed by a computing system according to an embodiment of the present invention.

FIG. 8 is a flowchart illustrating a scheduled neuron-level plasticity control method performed by a computing system according to an embodiment of the present invention.

## BEST MODE FOR CARRYING OUT THE INVENTION

I. Theoretical Background Researches

To help understanding of the present invention, studies that work as the theoretical background of the present invention will be introduced first hereinafter.

### Abstract

A simple, effective, and novel solution called neuron-level plasticity control (NPC) is proposed in order to solve the issue of catastrophic forgetting in an artificial neural network. The proposed method preserves existing knowledge by controlling the plasticity of a network at a neuron level rather than at a connection level during training of a new task. The neuron-level plasticity control evaluates the importance of each neuron and applies a low training speed to integrate important neurons.

In addition, an extension of NPC, called scheduled NPC (SNPC), is proposed. This extension uses training schedule information to more clearly protect important neurons. Results of experiments on incremental MNIST (iMNIST) and incremental CIFAR100 datasets show that NPC and SNPC are remarkably effective in comparison to connection-level integrated access methods, and in particular, SNPC exhibits excellent performance for the two datasets.

## 1 Introduction

In the process of realizing artificial general intelligence with deep neural networks, catastrophic forgetting is still one of the most fundamental challenges. The gradient descent, which is the most frequently used learning algorithm, generates problems when it is applied to train a neural network for multiple tasks in a sequential manner. When the gradient descent optimizes the neural network for a current task, knowledge about previous tasks is catastrophically overwritten by new knowledge.

After the initial discovery of the problem [McCloskey Cohen (1989) McCloskey and Cohen], various approaches have been proposed to alleviate catastrophic forgetting in artificial neural networks. One of the approaches is to include data for multiple tasks in all mini-batches. Although such a method may be effective in maintaining performance of the previous tasks, an overhead of maintaining training data for the previous tasks is generated. Several attempts have been made to achieve a similar effect using only a limited part of the previous data [Gepperth Karaoguz (2016) Gepperth and Karaoguz, Lopez-Paz (2017)] or without using the previous data [Li Hoiem (2018) Li and Hoiem, Shin et al. (2017) Shin, Lee, Kim, and Kim, Kamra et al. (2017) Kamra, Gupta, and Liu, Zacarias Alexandre (2018) Zacarias and Alexandre, Kim et al. (2018) Kim, Kim, and Lee].

Another approach is to isolate a part of the neural network that contains previous knowledge, and learn a new task using other parts of the network. This includes designing dynamic architectures for neural networks that may learn new tasks by assigning different parts of the network to the new tasks. [Fernando et al. (2017) Fernando, Banarse, Blundell, Zwols, Ha, Rusu, Pritzel, and Wierstra, Aljundi et al. (2017) Aljundi, Chakravarty, and Tuytelaars, Lee et al. (2017) Lee, Yun, Hwang, and Yang] Since the proposed algorithm learns multiple tasks using the other parts of the network, the present invention is closely related to this approach. Here, the unit of a part is an individual neuron.

Elastic weight consolidation (EWC) [Kirkpatrick et al. (2017) Kirkpatrick, Pascanu, Rabinowitz, Veness, Desjardins, Rusu, Milan, Quan, Ramalho, Grabska-Barwinska, et al.] is a notable development made in this field. Using diagonal lines of a Fisher information matrix, EWC identifies and consolidates parameters corresponding to the connection weights of neural networks important to previous tasks. In this way, a network may learn new tasks using less important parameters while maintaining previously learned knowledge. As the EWC has attracted much attention, it has been adopted in many studies [Lee et al. (2017) Lee, Kim, Jun, Ha, Zhang, Nguyen et al. (2017) Nguyen, Li, Bui, and Turner, Liu et al. (2018) Liu, Masana, Herranz, Van to de Weijer, Lopez and Bagdanov, Zenke et al. (2017) Zenke, Poole, Ganguli]. There is a significant room for improvement in the performance of the EWC alone [Parisi et al. (2018) Parisi, Kemker, Part, Kanan, Wermter]. In recent studies, EWC has been used in combination with other methods as a means for normalization [Kim et al. (2018) Kim, Kim, and Lee, Lee et al. (2017) Lee, Yun, Hwang, and Yang].

The present invention shows the limitation of the EWC and proposes an improved algorithm called neuron-level plasticity control (NPC). As is known from the name, NPC maintains existing knowledge by controlling plasticity of each neuron or each filter in a Convolutional Neural Network (CNN). This is in contrast to EWC, which works by consolidating individual connection weights. Another important characteristic of NPC is to stabilize important neurons by adjusting the learning rate, rather than maintaining important parameters to be close to a specific value. In addition to increasing efficiency of NPC, such a characteristic may increase memory efficiency regardless of the number of tasks. That is, since NPC only needs to store a single importance value per neuron, instead of a set of parameter values for each task, the amount of memory use may be consistently maintained regardless of the number of tasks.

Previous studies generally assume that an accurate timing of task switching is known. Accordingly, the learning algorithm may explicitly maintain and switch contexts, such as several sets of parameter values, whenever a task changes. On the other hand, NPC controls plasticity of neurons by continuously evaluating importance of each neuron without maintaining information and simply adjusting the learning rate according to the moving average of the importance. Therefore, NPC does not require information about the learning schedule, except the identifier (ID) of the current task, which is essentially needed to compute classification loss. On the other hand, NPC may be further improved when there is a predetermined learning schedule. To this end, an extension of NPC referred to as a scheduled NPC (SNPC) is proposed to more clearly preserve important neurons according to the learning schedule. For each task, SNPC identifies and consolidates important neurons while training other tasks. Experiment results show that NPC and SNPC are practically more effective in reducing catastrophic forgetting than the connection-level consolidation approach. In particular, the effect of catastrophic forgetting almost disappears in the evaluation of SNPC on the iMNIST dataset.

**2 Neuron-level Versus Connection-level Consolidation**

Although EWC and its subsequence studies [Kirkpatrick et al. (2017) Kirkpatrick, Pascanu, Rabinowitz, Veness, Desjardins, Rusu, Milan, Quan, Ramalho, Grabska-Barwinska, et al., Lee et al. (2017) Lee , Kim, Jun, Ha, and Zhang, Nguyen et al. (2017)Nguyen, Li, Bui, and Turner, Liu et al. (2018) Liu, Masana, Herranz, Van~de Weijer, Lopez, and Bagdanov , Zenke et al. (2017) Zenke, Poole, and Ganguli] focus on the concept that knowledge is stored in the connection weights of neural networks, the correlation between these connections is not emphasized. The loss function of EWC is defined as shown in Equation (1). Here, $T_n$ denotes an n-th task.

$$\text{Loss}_{\text{EWC}} = \text{Loss}_{T_n} + \sum_{k<n} \sum_i \frac{\lambda}{2} F_i (\theta_i - \theta_{i,T_n})^2 \qquad (1)$$

There is an implicit assumption that the weights of neural networks are roughly independent, and a neural network may be linearly approximated by its weights. However, the structures of deep neural networks are inherently hierarchical, and there is a strong correlation between parameters. Therefore, since parameter values may affect importance of other values, it is inappropriate to independently consider the connection weights.

It is insisted that neurons or CNN filters are more appropriate than individual connections for the basic unit of knowledge in consolidation of artificial neural networks. Conventional connection-level algorithms do not guarantee preservation of important knowledge expressed by neurons. Although the learning algorithm consolidates some connections to important neurons, the neurons may have maintained free incoming connections, and a change in these connections may severely affect the knowledge carried by the neuron.

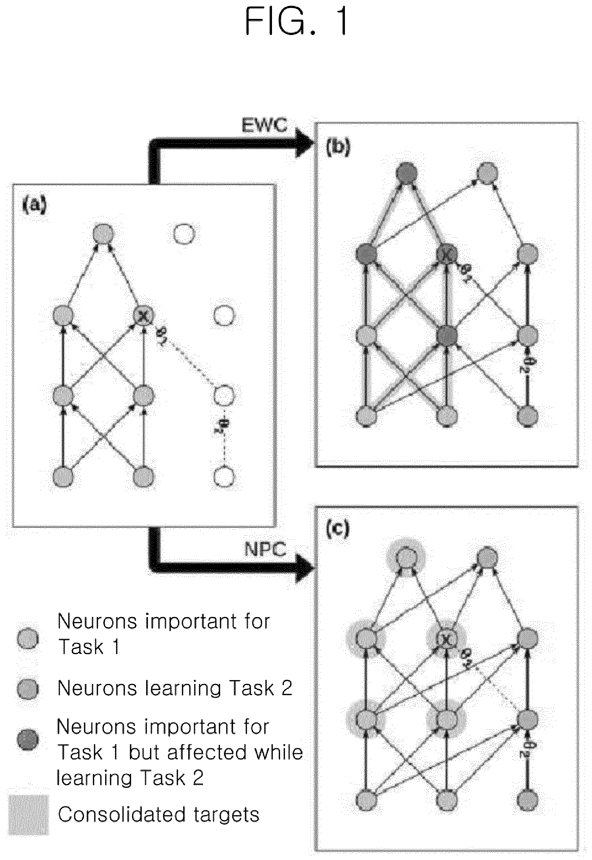

FIG. 1 shows the limitation of the connection-level consolidation of deep neural networks more clearly. In FIG. 1, the values of connection weights $\theta_1$ and $\theta_2$ are close to 0, and this allows the learning algorithms to evaluate their importance as minimum. That is, changing the values of $\theta_1$ and $\theta_2$ individually does not significantly affect the output of Task 1. In this situation, the connection level algorithm does not consolidate two connection parameters due to the minimal importance. However, when both parameters rapidly increase in subsequent learnings, it may seriously affect Task 1. It is since that they are closely related to each other. This problem may be particularly severe in convolutional layers in which the same filters are shared among multiple output nodes at different positions. Therefore, although the concept of connection-level consolidation may be fully implemented, catastrophic forgetting cannot be completely eliminated.

To overcome this problem, it is proposed to control plasticity at the neuron-level rather than at the connection-level as shown in FIG. 1(c). The proposed algorithm NPC consolidates all incoming connections of important neurons, including connections that may not be evaluated as important individually. As a result, NPC protects more important neurons from the change of unimportant neurons more effectively than the connection-level consolidation algorithms.

The connection from an unimportant neuron Y to an important neuron X may be small. It is since that the evaluation algorithm determines Y as an important neuron otherwise. In the example shown in FIG. 1, since NPC consolidates all incoming connections of X, the value of $\theta_1$ remains small as a result, so that change of $\theta_2$ does not seriously affect X. On the other hand, NPC does not consolidate connections of which destination neurons are unimportant although they are individually important. Accordingly, the total number of consolidated connections in the whole network is acceptable.

**3 Neuron-level Plasticity Control**

**3.1 Importance Evaluation**

To evaluate importance of each neuron, a criterion is adjusted based on Taylor extension used in the field of network pruning [Molchanov et al. (2016) Molchanov, Tyree, Karras, Aila and Kautz]. Although there are other methods that insist better performance in network theorem (네트워크 정리) [Yu et al. (2018) Yu, Li, Chen, Lai, Morariu, Han, Gao, Lin, Davis, Luo Wu (2017) Luo and Wu Luo et al. (2017) Luo, Wu, Lin], the Taylor criterion is selected due to computational efficiency. The Taylor criterion is computed from the gradient of the loss function with respect to neurons computed during back-propagation. Therefore, this may be easily integrated into the training process with minimal additional computation.

In this study, importance $C_i^{(t)}$ of i-th neuron ni at time t is defined as a moving average of a normalized Taylor criterion expressed as shown in Equation (4). Here, $N_{layer}$ is the number of nodes on a layer.

$$average_{batch} \left| n_i^{(t)} \frac{dL^{(t)}}{dn_i^{(t)}} \right| \qquad (2)$$

$$\widehat{c}_i^{(t)} = \frac{c_i^{(t)}}{\sqrt{\Sigma_{layer}(c_j^{(t)})^2/N_{layer}}} \qquad (3)$$

$$C_i^{(t)} = \delta C_i^{(t-1)} + (1-\delta)\widehat{c}_i^{(t)} \qquad (4)$$

When a node is shared at multiple positions (e.g., a convolution filter of CNN), an average of importance values is computed, before considering an absolute value, at all positions according to the original paper [Molchanov et al. (2016) Molchanov, Tyree, Karras, Aila, and Kautz]. However, a quadratic mean is used as shown in Equation (3) instead of L2-norm in order to maintain a stricter balance among the layers configured of different numbers of neurons.

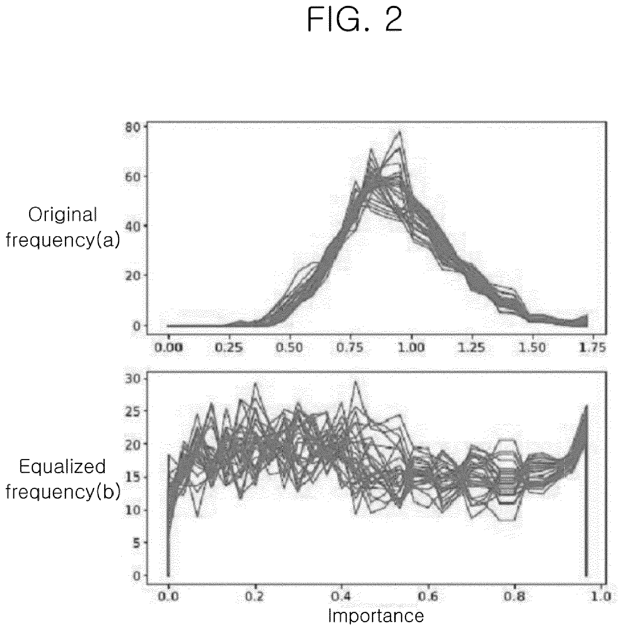

In the initial experiments, it is found that the distribution is approximately Gaussian as shown in FIG. 2(a). The distribution is equalized into a uniform distribution using Equation (5) shown below in order to better distinguish relative importance. Here, $erfc(x) = \frac{2}{\sqrt{\pi}} \int_x^\infty e^{-t^2} dt$ is a complementary error function [Wikipedia contributors (2018)]. FIG. 2(b) shows distribution of importance after equalization.

$$D_i^{(t)} = \frac{1}{2} erfc\left(-\frac{1}{\sqrt{2}} \frac{c_i^{(t)} - \mu_{layer}}{\sigma_{layer}}\right) \qquad (5)$$

## 3.2 Plasticity Control

The stability-plasticity dilemma is a well-known constraint in both artificial and biological neural systems [Mermillod et al. (2013) Mermillod, Bugaiska, Bonin]. Catastrophic forgetting may be considered as a consequence of the same trade-off problem (i.e., attempting to determine an optimal point that maximizes performance of the neural network for multiple tasks). Plasticity of each neuron is controlled by applying a different learning rate $\eta_i$ to each neuron ni. When $\eta_i$ is high, neurons actively learn new knowledge at the cost of rapidly losing existing knowledge. On the contrary, when $\eta_i$ is low, existing knowledge may be better preserved. However, the neurons will be reluctant to learn new knowledge.

In order to encourage neural networks to find a good stability-plasticity balance, two losses are defined as functions of $\eta_1$ that perform opposite roles, and then the functions are combined. The first one is a loss from the perspective of stability for minimizing forgetting of existing knowledge. It is a function monotonically increasing starting at $\eta_1$=0 and should be limited by the amount of current knowledge. The upper bound of the current knowledge is heuristically approximated using $a_1 tC_1$ (here, $a_1$ is a scaling constant, and $t \geq 1$ is currently in the training step). Here, since new tasks are provided at a constant rate in this experiment, it is assumed that the total amount of knowledge is directly proportional to the training time. To make a monotonically increasing function of $\eta_1$, **tanh($b_1\eta$)** is combined with the upper bound. Here, bi is another constant for controlling the gradient of the tanh function. Consequently, the stability-loss is defined as **$a_1 tC_1 tanh(b_1\eta_i)$**.

The second function is a loss from the perspective of plasticity for decreasing reluctance to new knowledge. It is a decreasing function of $\eta_1$ starting from the upper bound $\eta_i = 0$ and monotonically decreasing to 0. In this case, the upper bound does not consider existing knowledge and therefore is unrelated to Ci or t. Accordingly, the plasticity-wise loss is defined as $a_2(1-tanh(b_2\eta_i))$. Here, $a_2$ and $b_2$ are constants for controlling the scale and the gradient.

In order to find the balance between stability and plasticity, $\eta_1$ that minimizes the combined loss function of Equation (6) shown below is selected.

$$\underset{\eta_1}{argmin}\, f(\eta_1) = \underset{\eta_1}{argmin}\, \{a_1 tC_i tanh(b_1\eta_1) + a_2(1 - tanh(b_2\eta_i))\} \qquad (6)$$

Equation (7) shown below is obtained by setting $\dfrac{df}{d\eta_1} = 0$. Here, $\beta = \dfrac{a_2 b_2}{a_1 b_1}$.

$$a_1 b_1 tC_1 sech^2(b_1\eta) - a_2 b_2 sech^2(b_2\eta) = 0 \qquad (7)$$

$$\Leftrightarrow \frac{cosh(b_2\eta)}{cosh(b_1\eta)} = \sqrt{\frac{a_2 b_2}{a_1 b_1 tC_1}} = \sqrt{\frac{\beta}{tC_1}} \qquad (8)$$

The property of function $\dfrac{cosh(b_2\eta)}{cosh(b_1\eta)}$ largely depends on whether $b_1 \geq b_2$ or $b_1 < b_2$. When $b_1 \geq b_2$, the optimal $\eta_i$ becomes a simple step function. Therefore, $b_1 < b_2$ is set as a constraint.

When $tC_i > \beta$, $f(\eta_i)$ strictly increases with respect to $\eta_i$, and the optimal $\eta_i$ is a minimum value, i.e., $\eta_i$=0. In the case of $tC_i \geq \beta$, a Taylor approximation is applied to solve Equation (7). This is since that a closed form inverse function of $\dfrac{cosh(b_2\eta)}{cosh(b_1\eta)}$ does not exist. When cosh is an even function, only the even degree terms remain as shown in Equation (9).

$$\frac{cosh(b_2\eta_i)}{cosh(b_1\eta_i)} = 1 + (b_2^2 - b_1^2)\eta_i^2 + O(\eta_i^4) = \sqrt{\frac{\beta}{tC_i}} \qquad (9)$$

When it is assumed that $O(\eta_i^4) \approx 0$ for small $\eta_i$, the solution of Equation (9) is as shown in Equation (10).

At this point, $\alpha = 1\sqrt{b_2^2 - b_1^2}$ .

$$\eta_i = \sqrt{\frac{\sqrt{\frac{\beta}{tC_i}}-1}{b_2^2 - b_1^2}} = \alpha\sqrt{\sqrt{\frac{\beta}{tC_i}}-1} \qquad (10)$$

In Equation (10) shown above, $\eta_i=0$ when $tC_i=\beta$, which makes the two functions be continuously connected. If the two cases are combined when $tC_i>\beta$ and $tC_i\leq\beta$, the solution of Equation (7) is given as shown in Equation (11). In this case, $\alpha, \beta > 0$ are hyperparameters.

$$\eta_i = \alpha\sqrt{max(\sqrt{\frac{\beta}{tC_i}}-1,0)} \qquad (11)$$

In Equation (11), the larger the $C_i$, the smaller the $\eta_i$. Therefore, important neurons are consolidated in subsequent learnings. However, when $C_i=0$, $\eta_i$ diverges. This may be explained from the perspective of the plasticity-stability dilemma. When a neuron has no knowledge at all, it is desirable to learn the new knowledge as much as possible without considering the cost of existing knowledge. However, this is actually wrong since even when the neuron has no knowledge to lose, it is a learning rate appropriate to increase learning efficiency although the learning rate is not so great. Therefore, an upper bound of the learning rate is set so as not to generate a problem due to a large learning rate. The final solution of Equation (7) is as shown in Equation (12) .

$$\eta_i = min(\eta_{max}, \alpha\sqrt{max(\sqrt{\frac{\beta}{tC_i}}-1,0)} \qquad (12)$$

Algorithm 1 shown below is an NPC algorithm. Although NPC is designed to be executed without a predetermined learning schedule, it is unavoidable to compute the loss of each task as it requires knowledge of a task to which the current training sample belongs. However, additional task-specific information, such as a latest parameter set optimized for each task, is not required. Considering that it is simply computed from the activation and gradient, which are computed by the back-propagation algorithm, the overhead for implementing the NPC is minimal.

Algorithm 1 Neuron-level Plasticity Control (NPC)

```
f: neural network model

nᵢ: i-th neuron in f

wⱼᵢ: weight of connection from nⱼ to nᵢ

ηₘₐₓ: upper bound of learning rate

α, β: hyperparameters

Cᵢ: importance of i-th neuron


t=1

Cᵢ=0, ∀i

for input, label in training dataset do

    y ← f(input)

    L ← CrossEntropy(y, label)

    for nᵢ in f do
```

$$c_i \leftarrow \underset{batch}{average}\left|n_i \frac{dL}{dn_i}\right|$$

$$\hat{c}_i \leftarrow c_i \Big/ \sqrt{\sum_{layer} (c_j)^2 / N_{layer}}$$

$$C_i \leftarrow \delta C_i + (1-\delta)\,\hat{c}_i$$

$$\eta_i \leftarrow min(\eta_{max}, \alpha \sqrt{max(\sqrt{\frac{\beta}{tC_i}} - 1, 0))}$$

$$w_{ji} \leftarrow w_{ji} - \eta_i \frac{dL}{dw_i}, \forall j$$

```
    end for

    t ← t+1

end for
```

### 3.3 Instance Normalization

Batch normalization (BN) plays an important role in the training of deep neural networks [Ioffe Szegedy (2015) Ioffe and Szegedy]. However, since the mean and the variance are greatly affected by switching of tasks, the vanilla batch normalization does not work well in a continual learning environment. In this case, there are a few alternatives, such as conditional batch processing normalization [De ~ Vries et al. (2017) De ~ Vries, Strub, Mary, Larochelle, Pietquin and Courville] and virtual batch normalization [Salimans et al. (2016) Salimans, Goodfellow, Zaremba, Cheung, Radford and Chen]. However, although these two methods may be applied to SNPC, they are not appropriate for NPC since the methods maintain task-specific information. Therefore, a simplified version of instance normalization, from which the affine transforms and the moving average are removed, is applied [Ulyanov et al. (2016) Ulyanov, Vedaldi and Lempitsky]. Considering that the instance normalization may be independently applied to each sample, it operates without any special manipulation of model parameters at the time of test, as well as at the time of training.

### 4. Scheduled NPC

### 4.1 NPC Using Learning Schedule

NPC does not depend on a predetermined learning schedule. However, when a task switching schedule is available, it is desirable to actively use the information to improve performance. Although the learning schedule is not determined in advance actually, recent studies on continual learning have been evaluated under similar circumstances. [Li Hoiem(2018)Li and Hoiem, Shin et al.(2017)Shin, Lee, Kim, and Kim, Kamra et al.(2017)Kamra, Gupta, and Liu, Gepperth Karaoguz(2016)Gepperth and Karaoguz, Lopez-Paz(2017), Fernando et al.(2017)Fernando, Banarse, Blundell, Zwols, Ha, Rusu, Pritzel, and Wierstra, Lee et al.(2017)Lee, Yun, Hwang, and Yang, Aljundi et al. (2017)Aljundi, Chakravarty, and Tuytelaars, Kirkpatrick et al.(2017)Kirkpatrick, Pascanu, Rabinowitz, Veness, Desjardins, Rusu, Milan, Quan, Ramalho, Grabska-Barwinska, et al., Lee et al.(2017)Lee, Kim, Jun, Ha, and Zhang, Nguyen et al.(2017)Nguyen, Li, Bui, and Turner, Liu et al.(2018)Liu, Masana, Herranz, Van~de Weijer, Lopez, and Bagdanov, Zenke et al.(2017)Zenke, Poole, and Ganguli, Zacarias Alexandre(2018)Zacarias and Alexandre, Kim et al.(2018)Kim, Kim, and Lee]

Algorithm 2 shown below presents a Scheduled Neuron-level Plasticity Control (SNPC) algorithm, which is an extension of NPC designed to more actively utilize knowledge of a task switching schedule.

**Algorithm** 2 Scheduled Neuron-level Plasticity Control (SNPC)

f: neural network model shared among multiple tasks

$n_i$: i-th neuron in f

$w_{ji}$: weight of connection from nj to ni

$T_k$: k-th task for continual learning

$r_k$: ratio of neurons assigned for $T_k$

$\eta_{max}$: upper bound of learning rate

$\alpha, \beta$: hyperparameters


**for** $T_k$ **in** {T} **do**

    0. Initialize $C_i$=0, $\forall$i

    1. Train f for $T_k$ with Algorithm 1. evaluating $C_i$.

    2. For each layer, select top $r_k \times N_{layer}$ neurons from each layer with the biggest $C_i$ among free neurons.


    3. Fix the connections from other free neurons to the selected neurons to zero.

    4. Train f for $T_k$ by using Algorithm 1 for a few epochs.

    5. Fix $w_{ji}$'s for the selected neurons.

**end for**

When learning begins, all neurons are free (i.e., may learn any task) since no neurons are assigned to a specific task. When a schedule is given, SNPC selects a subset of free neurons most important to each task and assigns it to the task. Then, the selected neurons are protected from the effect of free neurons that can be modified in an unpredictable way while learning other tasks. This is achieved by freezing connection weights from the free neurons to the selected neurons to zero. However, when connections from the free neurons to the selected neurons are removed in this way, it may generate potential problems. First, the capacity of the neural network may be reduced. Second, new knowledge may prevent improving performance of the network for previous tasks. Although the first problem may severely affect the performance when the model capacity is insufficient for the total sum of all tasks, it can be alleviated comparatively easily in a larger neural network. Although the second problem has a remote possibility, this phenomenon is almost unpredictable in practice. When knowledge of previous tasks is not maintained in any way, catastrophic forgetting may occur almost at all times due to changes in unconsolidated neurons.

**4.2 Per-task Neuron Allocation**

SNPC determines the number of neurons to be allocated to each task by $r_k \times N$ layers (here, $r_k$ is $\Sigma_k r_k = 1$, which is the ratio of neurons allocated to $T_k$). SNPC improves the balance between tasks and simplicity by sharing the same values in all layers.

However, when it is considered that usefulness of connections from previously consolidated neurons is not comparable to that of neurons directly allocated to a corresponding task, $r_k$ should not be evenly distributed ($r_1 = r_2 = ... = r_k$) among the tasks. When the former is more useful than the latter as much as $u < 1$ times, the total usefulness of the connections that can be used for task $T_k$ is proportional to $V_k$ according to Equation (13) shown below. Here, the first term denotes the total usefulness of connections between neurons allocated to $T_k$, and the second term denotes the total usefulness of connections from previously consolidated neurons to the neurons for $T_k$.

$$V_k = r_k^2 + ur_k(r_1 + r_2 + \cdots + r_{k-1}) = r_k^2 + ur_k \sum_{l=1}^{k-1} r_l \quad (13)$$

Therefore, all $V_k$ should be equal for all operations for the sake of fair distribution. Since this constraint generally represents a nonlinear relationship without having a solution of a closed form, a solution is found numerically. When five tasks are learned (k=5), the neural network shows balanced results when $\mu = 0.5$ and the values of $r_k$ are 0.2862, 0.2235, 0.1859, 0.1610, and 0.1433, respectively. The optimal distribution may be affected by other factors, such as difficulty of a task or similarity between tasks. However, these task-specific factors are not considered in this study.

**5 Experiments**

**5.1 Datasets and Implementation Detail**

Experiments on incremental versions of MNIST datasets [LeCun et al. (1998) LeCun, Bottou, Bengio, and Haffner] and CIFAR100 [Krizhevsky Hinton (2009) Krizhevsky and Hinton] have been conducted. Here, a dataset containing L classes are divided into K subsets of L/K classes, each of which is classified by the k-th task. In the cases of MNIST and CIFAR100, K is set to 5. For the sake of preprocessing, random cropping with a padding size of 4 is applied to both of the two datasets, and an additional random horizontal flip for the incremental CIFAR100 (iCIFAR100) dataset is applied. In addition, in order to maintain consistency, the unit of one epoch is redefined in all experiments as a cycle in which the total number of training data is displayed. For example, since there are 60,000 training samples in the original MNIST dataset, one epoch of the iMNIST dataset is defined as processing of 12,000 samples five times. With the new definition of an epoch, the model has been trained for 10 epochs on a subset for each task of iMNIST, and the model is trained for 30 epochs on each subset of iCIFAR100. The first five subsets of iCIFAR100 are used in this experiment. A mini batch size of 256 has been used for all tasks.

A slightly modified VGG-16 [Simonyan Zisserman (2014) Simonyan and Zisserman] network is used. As described above, all batch normalization layers are replaced with instance normalization layers. In the case of the final classification layer, a fully-connected layer is arranged for each target task. The cross-entropy loss for each task is computed only at the output node belonging to the current task.

In all experiments, $\alpha = 0.1$ and $\eta_{max} = 0.1$ are set. In the case of NPC, $\beta$ is set to 200. However, in the case of SNPC, since the learning rate of important nodes does not need to be completely dropped to 0, a larger value of 500 is set for SNPC. A plain SGD optimizer with a mini-batch size of 256 is used in all experiments.

Three conventional learning algorithms including EWC, L2 regularization, and baseline SGD are implemented for comparison. In the case of EWC, $\lambda = 1000$ is set to show the best performance in the experimental environment. When the NPC algorithm is not used, the learning rate is set to 0.01.

**5.2 Experimental Results**

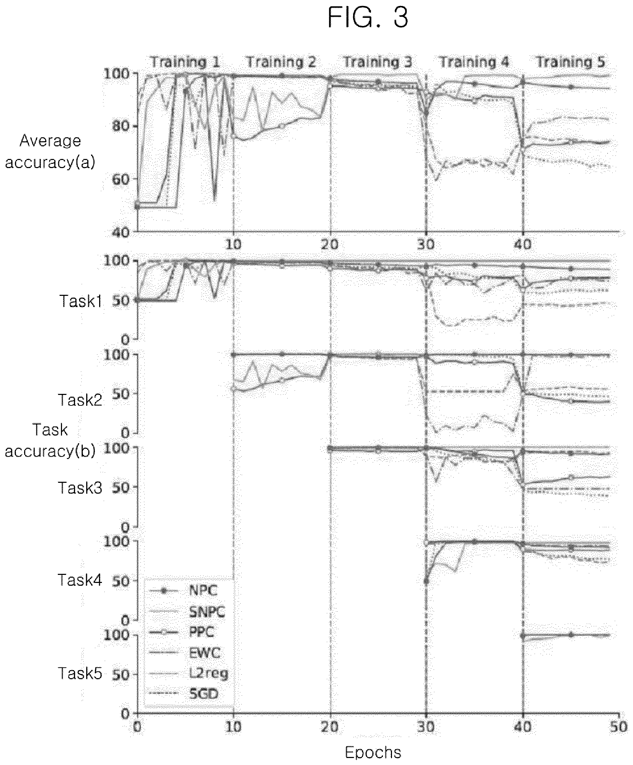

FIGS. 3 and 4 show performance of five continual learning algorithms (NPC, SNPC, EWC, L2 regularization, and SGD) in iMNIST and iCIFAR100, respectively. In FIG. 3, NPC and SNPC show further excellent performance than EWC and L2 regularization from the perspective of average accuracy. Their training curves show that when the network is trained by NPC or SNPC, the knowledge learned earlier is much less affected by the knowledge learned later. In particular, in the case of SNPC, performance of the first task is almost unaffected by subsequent learnings. The results show that SNPC alleviates catastrophic forgetting for iMNIST until the point where its effect disappears.

Additional configurations are tested for the iMNIST dataset. Parameter-wise plasticity control (PPC) controls plasticity at the connection level, not the neuron level. Like NPC, importance is evaluated using the Taylor criterion.

$\beta$=300 is used, and this is the minimum value of $\beta$ that allows the PPC to sufficiently learn the last task of the iMNIST algorithm. Performance of PPC is worse than that of NPC, and this confirms that neurons are more appropriate than connections as units of neural network consolidation.

FIG. 4 shows that NPC and SNPC provide average accuracy higher than those of other algorithms in iCIFAR100, and it is more difficult to achieve than in iMNIST. However, in the case of NPC, accuracy of the last task is lower than that of the previous task. Although the same problem is observed in other algorithms, this is more severe in the case of NPC. It is assumed that the main reason is that partial consolidation of neural networks consumes learning capacity of the model. This issue is not clearly observed in iMNIST. It is since that the VGG network may have mastered subsequent tasks with minimal capacity provided by the other neurons owing to simplicity thereof. Such a difference between NPC and SNPC shows that NPC preserves existing knowledge better, but consumes learning capacity of the model more rapidly. That is, since NPC has no limitation or regularization on the number of neurons allocated per task, the model generally tends to use most of the neurons for previous tasks. Accordingly, NPC consolidates a considerable number of neurons to protect knowledge of previous tasks from catastrophic forgetting, and as a result, performance in the last task is lowered as shown in FIG. 4. However, SNPC suffers less difficulty caused by the capacity exhaustion problem since only $r_k \times N_{layer}$ neurons are consolidated for each task, and ensures that subsequent tasks utilize a specific number of neurons.

In addition, it is observed that the neural network learns subsequent tasks faster than previous tasks for continual learning. The reason is that since the neural network utilizes the knowledge learned in the previous tasks, the subsequent tasks may benefit from the transferred knowledge. To make it clear, a simple experiment has been conducted to test whether SNPC reuses the knowledge previously trained from previous tasks while learning the last task. Three VGG network instances are trained in iCIFAR100 using only 14.33% of neurons (a proportion equal to $r_5$) in different settings. In FIG. 5, line (a) shows the learning curve of SNPC training $T_5$ after four precedent tasks. Dotted line (b) shows that only 14.33% of neurons connected to other randomly initialized and fixed neurons are trained. Finally, dotted line (c) is the learning curve when the network learns only 14.33% of neurons, starting from randomly initialized parameters. FIG. 5 shows that SNPC learns tasks much faster than in the other two settings. This confirms that SNPC actively reuses the knowledge obtained from previous tasks.

**6 Conclusion**

In this study, two continual learning algorithms of NPC and SNPC, which control plasticity of neural networks at the neuron level, are proposed. NPC does not maintain information such as a latest set of parameters optimized for each task. Therefore, it may be executed without a predefined training schedule. On the other hand, SNPC has and actively utilizes a predefined learning schedule to more explicitly protect important neurons. According to the results of experiments on the iMNIST and iCIFAR100 datasets, NPC and SNPC are much more effective than conventional connection-level consolidation algorithms that do not consider the relation among connections. In particular, catastrophic forgetting almost disappears in the results of SNPC on the iMNIST dataset.

Although NPC and SNPC are significantly improved in the continual learning, problems to be solved still remain. Although dependency of NPC on information is minimal, it is still limited by the fact that tasks should be identified to compute a classification loss. In addition, although NPC defines the units and methods for controlling plasticity, strategies for evaluating and managing importance of each neuron still need to be explored.

The experiment is focused more on proving the concept in a continual learning environment, rather than showing the best performance in the classification. For example, a latest classification model such as [AmoebaNetReal et al. (2018) Real, Aggarwal, Huang, and Le] shows much higher capacity than VGG in a single working environment. Another choice in favor of simplicity is instance normalization, and this may not be the best choice for performance.

Residual connections [He et al. (2016) He, Zhang, Ren, and Sun] are one of the obstacles that should be solved to apply NPC to more diverse architectures. Interpreting summation of multiple neuron outputs and determining neurons that should be preserved is a non-obvious problem, especially when important and unimportant neurons are added.

As a general online learning benchmark such as iCIFAR100 does not revisit the same task, the model may cause catastrophic forgetting by simply blocking passages. However, in a situation where a task can be trained two or more times, it is desirable to further improve the model by consolidating the knowledge acquired while learning subsequent tasks. This is not a problem of NPC, but may be a problem of SNPC considering that neurons for subsequent tasks may grow large depending on neurons for previous tasks. In addition to using a sufficiently small learning rate, one of simple solutions is to treat a revisited task as if it is a new task. However, although this may alleviate the effect of catastrophic forgetting, it may generate a practical problem in the long run as the capacity of the model should be much larger.

Similar to the Taylor criterion used for evaluation of importance, studies on the network theorem show how a deep learning model may learn complex knowledge at a surprisingly small size. However, when there is not explicit intervention, deep neural networks tend to consume more capacity than actually needed. Although SNPC avoids this problem by allocating task-specific neurons, NPC is not excluded from this problem as the model capacity is exhausted when tasks are accumulated. It is observed that first few tasks tend to occupy most of models regardless of a model size. It is believed that NPC would benefit greatly when the model has a method of forcing to use a minimum capacity per task.

II. Method and system proposed in the present invention

The method of overcoming catastrophic forgetting through neuron-level plasticity control (NPC) or scheduled NPC (SNPC) according to the studies described above may be performed by a computing system.

The computing system means a data processing device having a computing ability for implementing the spirit of the present invention, and generally, those skilled in the art may easily infer that any device capable of performing a specific service, such as a personal computer, a portable terminal or the like, as well as a data processing device, such as a server or the like, that can be accessed by a client through a network, may be defined as a computing system.

The computing system may be provided with hardware resources and/or software needed to implement the spirit of the present invention, and does not necessarily mean a physical component or a device. That is, the computing system may mean a logical combination of hardware and/or software provided to implement the spirit of the present invention, and may be implemented as a set of logical components if needed by being installed in the devices separated from each other and performing their functions to implement the spirit of the present invention. In addition, the computing system may mean a set of components separately implemented for each function or role for implementing the spirit of the present invention. The predictive model generation system may be implemented in the form of a plurality of modules.

In addition, in this specification, a module may mean a functional or structural combination of hardware for performing the spirit of the present invention and software for driving the hardware. For example, those skilled in the art may easily infer that the module may mean a predetermined code and a logical unit of hardware resources for executing the predetermined code, and does not necessarily mean a physically connected code or a single type of hardware.

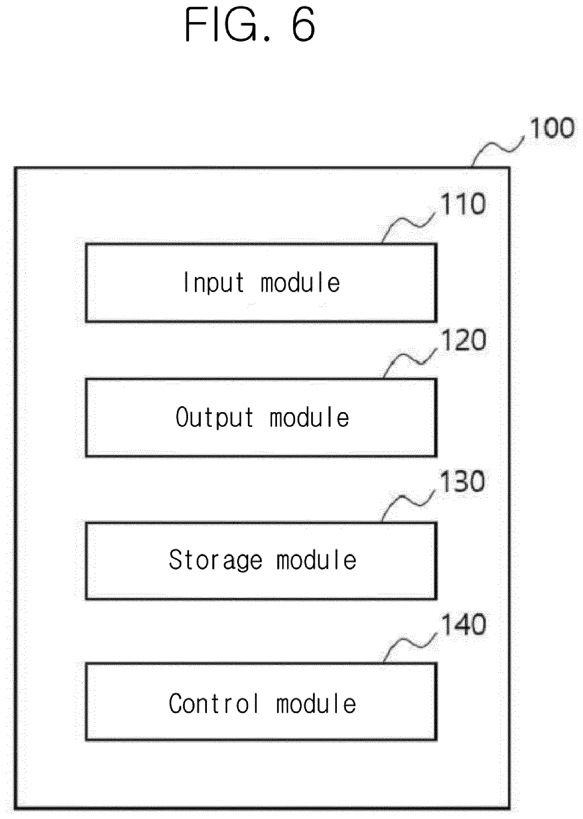

FIG. 6 is a view showing the configuration of a computing system according to an embodiment of the present invention.

Referring to FIG. 6, the computing system 100 may include an input module 110, an output module 120, a storage module 130, and a control module 140.

The input module 110 may receive various data needed for implementing the spirit of the present invention from the outside of the computing device 110. For example, the input module 110 may receive training datasets, various parameters, and/or hyperparameters.

The output module 120 may output data stored in the computing system 100 or data generated by the computing system 100 to the outside.

The storage module 130 may store various types of information and/or data needed for implementing the spirit of the present invention. For example, the storage module 130 may store neural network models, training data, and various parameters and/or hyperparameters. The storage module 130 may include volatile memory such as Random Access Memory (RAM) or non-volatile memory such as a Hard Disk Drive (HDD) or a Solid-State Disk (SSD).

The control module 140 may control other components (e.g., the input module 110, the output module 120, and/or the storage module 130) included in the computing system 100. The control module 140 may include a processor such as a single-core CPU, a multi-core CPU, or a GPU.

In addition, the control module 140 may perform neuron-level plasticity control (NPC) or scheduled NPC (SNPC) according to the studies described above. For example, the control module 140 may apply the neural network models and training data stored in the storage module 130 to the NPC algorithms or the SNPC algorithms described above.

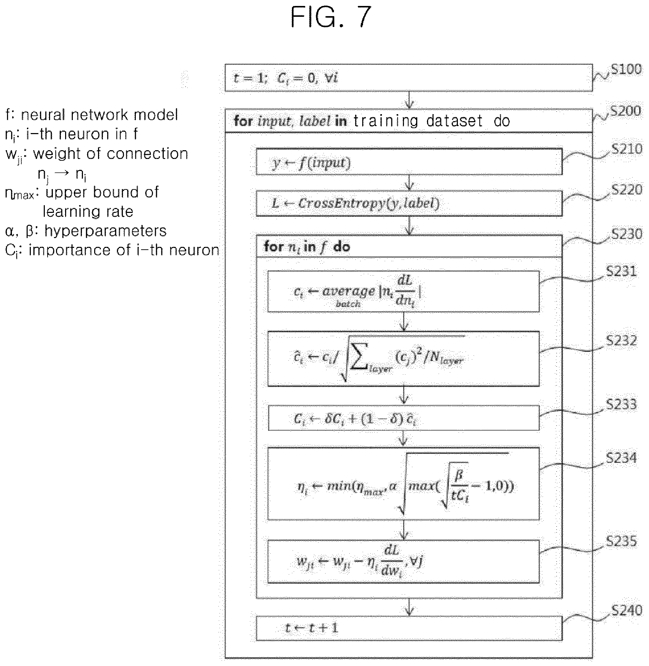

FIG. 7 is a flowchart illustrating a neuron-level plasticity control method performed by the control module 140.

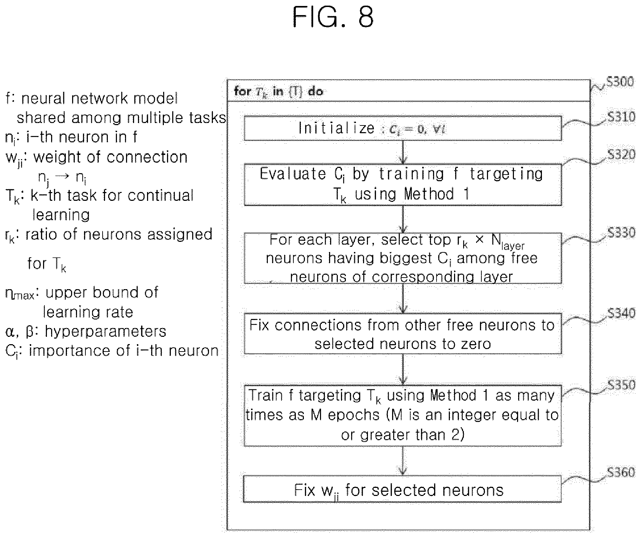

FIG. 8 is a flowchart illustrating a scheduled neuron-level plasticity control method performed by the control module 140.

Meanwhile, according to an implementation example, the computing system 100 may include at least a processor and a memory for storing programs executed by the processor. The processor may include single-core CPUs or multi-core CPUs. The memory may include high-speed random-access memory and may include one or more non-volatile memory devices such as magnetic disk storage devices, flash memory devices, and other non-volatile solid state memory devices. Access to the memory by the processor and other components may be controlled by a memory controller.

Meanwhile, the method according to an embodiment of the present invention may be implemented in the form of a computer-readable program command and stored in a computer-readable memory or recording medium. The computer-readable recording medium includes all types of recording devices for storing data that can be read by a computer system.

The program commands recorded in the recording medium may be specially designed and configured for the present invention, or may be known to and used by those skilled in the software field.

Examples of the computer-readable recording medium include magnetic media such as hard disks, floppy disks, and magnetic tapes, optical media such as CD-ROMs and DVDs, magnetooptical media such as floptical disks, and hardware devices specially configured to store and execute program commands, such as ROM, RAM, flash memory and the like. In addition, the computer-readable recording medium may be distributed in computer systems connected through a network to store and execute computer-readable codes in a distributed manner.

Examples of program instructions include high-level language codes that can be executed by a device that electronically processes information using an interpreter or the like, e.g., a computer, as well as machine language codes such as those produced by a compiler.

The hardware device described above may be configured to execute as one or more software modules to perform the operation of the present invention, and vice versa.

The above description of the present invention is for illustrative purposes, and those skilled in the art may understand that it is possible to easily transform into other specific forms without changing the spirit or essential features of the present invention. Therefore, it should be understood that the embodiments described above are illustrative and non-limiting in all respects. For example, each component described as a single form may be implemented in a distributed manner, and in the same manner, components described as being distributed may also be implemented in a combined form.

The scope of the present invention is indicated by the claims described below, rather than the detailed description described above, and all changes or modifications derived from the meaning and scope of the claims and their equivalents should be construed as being included in the scope of the present invention.

**INDUSTRIAL APPLICABILITY**

The present invention may be used for a method of overcoming catastrophic forgetting through neuron-level plasticity control and a computing system for performing the same.

**Claims**

1.  A neuron-level plasticity control method for an artificial neural network model configured of first to N-th neurons (here, N is an integer equal to or greater than 2), the method comprising the step of performing, by a computing system, a weight adjustment process on each of a plurality of individual data included in a predetermined training dataset based on the individual data (here, a corresponding correct answer label is assigned to each of the plurality of individual data), wherein
    the step of performing a weight adjustment process based on the individual data includes the steps of:

    inputting the individual data into the artificial neural network model to acquire a predicted value corresponding to the individual data;
    computing a cross entropy based on the predicted value and the correct answer label assigned to the individual data; and
    adjusting weights of all connections that use neuron ni as an incoming node, for each neuron ni included in the artificial neural network model (here, i is an integer of 1<=i<=N), wherein
    the step of adjusting weights of all connections that use neuron ni as an incoming node includes the steps of:

    computing importance Ci of the neuron $n_i$, which is a moving average of a normalized Taylor criterion;
    computing a learning rate $\eta_i$ of the neuron ni based on [Equation 1]; and
    updating the weights of all connections that use neuron ni as an incoming node through a gradient descent to which the computed learning rate $\eta_i$ is applied.

    $$[\text{Equation 1}] \quad \eta_i = min(\eta_{max}, \alpha \sqrt{max(\sqrt{\frac{\beta}{tc_i}} - 1, 0))}$$

    (here, $\alpha$ and $\beta$ are predefined hyperparameters of the artificial neural network model, $\eta_{max}$ is an upper bound of a predefined learning rate, and t is a sequence number of the individual data in the training dataset)

2.  A scheduled neuron-level plasticity control method for an artificial neural network model, the method comprising the steps of:

    acquiring, by a computing system, a training dataset corresponding to each of a plurality of tasks, which are targets of continual learning; and

performing, by the computing system, a learning process corresponding to the task, for each of the plurality of tasks, wherein

the step of performing a learning process corresponding to the task includes the steps of:

performing, by the computing system, the neuron-level plasticity control method according to claim 1 using a training dataset corresponding to the task;

selecting, by the computing system, for each of a plurality of layers configuring the artificial neural network, some important neurons having greatest importance among free neurons included in the layer;

fixing weights of all connections from the free neurons to the important neurons in the artificial neural network to 0;

repeating, by the computing system, the neuron-level plasticity control method according to claim 1 using a training dataset corresponding to the task as many times as two or more epochs; and

fixing the weights of all connections that use the important neurons as incoming nodes.

3. A computer program installed in a data processing device and stored in a recording medium to perform the method disclosed in claim 1.

4. A computer program installed in a data processing device and stored in a recording medium to perform the method disclosed in claim 2.

5. A computing system comprising: a processor; and a memory for storing a computer program executed by the processor, wherein the computer program, when executed by the processor, operates the computing system to perform the method disclosed in claim 1.

6. A computing system comprising: a processor; and a memory for storing a computer program executed by the processor, wherein the computer program, when executed by the processor, operates the computing system to perform the method disclosed in claim 2.

# FIG. 1

○ Neurons important for Task 1

● Neurons learning Task 2

● Neurons important for Task 1 but affected while learning Task 2

▨ Consolidated targets

# FIG. 2

Original
frequency(a)

Equalized
frequency(b)

Importance

# FIG. 3

# FIG. 4

FIG. 5

# FIG. 6

100

110

Input module

120

Output module

130

Storage module

140

Control module

# FIG. 7

f: neural network model
$n_i$: i−th neuron in f
$w_{ji}$: weight of connection
  $n_j \rightarrow n_i$
$\eta_{max}$: upper bound of
  learning rate
$\alpha$, $\beta$: hyperparameters
$C_i$: importance of i−th neuron

$t = 1;\ C_i = 0,\ \forall i$ — S100

**for** *input, label* **in** training dataset do — S200

$y \leftarrow f(input)$ — S210

$L \leftarrow CrossEntropy(y, label)$ — S220

**for** $n_i$ **in** $f$ **do** — S230

$c_i \leftarrow \underset{batch}{average}\ |n_i \dfrac{dL}{dn_i}|$ — S231

$\hat{c}_i \leftarrow c_i / \sqrt{\sum_{layer}(c_j)^2 / N_{layer}}$ — S232

$C_i \leftarrow \delta C_i + (1-\delta)\,\hat{c}_i$ — S233

$\eta_i \leftarrow min(\eta_{max}, \alpha \sqrt{max(\sqrt{\dfrac{\beta}{tC_i}} - 1, 0))}$ — S234

$w_{ji} \leftarrow w_{ji} - \eta_i \dfrac{dL}{dw_i}, \forall j$ — S235

$t \leftarrow t + 1$ — S240

# FIG. 8

f: neural network model
  shared among multiple tasks
$n_i$: i-th neuron in f
$w_{ji}$: weight of connection
  $n_j \rightarrow n_i$
$T_k$: k-th task for continual
  learning
$r_k$: ratio of neurons assigned
  for $T_k$

$\eta_{max}$: upper bound of
  learning rate
$\alpha, \beta$: hyperparameters
$C_i$: importance of i-th neuron

**for $T_k$ in {T} do** — S300

Initialize : $c_i = 0, \forall i$ — S310

Evaluate $C_i$ by training f targeting $T_k$ using Method 1 — S320

For each layer, select top $r_k \times N_{layer}$ neurons having biggest $C_i$ among free neurons of corresponding layer — S330

Fix connections from other free neurons to selected neurons to zero — S340

Train f targeting $T_k$ using Method 1 as many times as M epochs (M is an integer equal to or greater than 2) — S350

Fix $w_{ji}$ for selected neurons — S360

## INTERNATIONAL SEARCH REPORT

| International application No. |
|---|
| **PCT/KR2020/009823** |

### A. CLASSIFICATION OF SUBJECT MATTER

**G06N 3/04**(2006.01)i; **G06N 3/063**(2006.01)i

According to International Patent Classification (IPC) or to both national classification and IPC

### B. FIELDS SEARCHED

Minimum documentation searched (classification system followed by classification symbols)

G06N 3/04; G06N 3/08; G06N 3/063

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 뉴런(neuron), 가소성(plasticity), 가중치(weight), 중요도(importance value), 학습률(learning rate), 경사하강법(gradient descent), 파국적인 망각(catastrophic forgetting)

### C. DOCUMENTS CONSIDERED TO BE RELEVANT

| Category* | Citation of document, with indication, where appropriate, of the relevant passages | Relevant to claim No. |
|---|---|---|
| X | PAIK, Inyoung et al. Overcoming Catastrophic Forgetting by Neuron-level Plasticity Control. arXiv:1907.13322v1. 31 July 2019. [Retrieved on 05 November 2020]. Retrieved from <https://arxiv.org/abs/1907.13322>. See pages 3-6. | 1-6 |
| A | LIU, Gabrielle K. Weight Friction: A Simple Method to Overcome Catastrophic Forgetting and Enable Continual Learning. arXiv:1908.01052v2. 17 August 2019. [Retrieved on 05 November 2020]. Retrieved from <https://arxiv.org/abs/1908.01052v2>. See pages 2-7. | 1-6 |
| A | GOODRICH, Ben et al. Neuron Clustering for Mitigating Catastrophic Forgetting in Feedforward Neural Networks. 2014 IEEE Symposium on Computational Intelligence in Dynamic and Uncertain Environments (CIDUE). 12 December 2014. See sections 3-4. | 1-6 |
| A | ALLRED, Jason M. et al. Controlled Forgetting: Targeted Stimulation and Dopaminergic Plasticity Modulation for Unsupervised Lifelong Learning in Spiking Neural Networks. arXiv:1902.03187v2. 19 September 2019. [Retrieved on 05 November 2020]. Retrieved from <https://arxiv.org/abs/1902.03187>. See pages 3-18. | 1-6 |
| A | CN 109934343 A (INSTITUTE OF AUTOMATION, CHINESE ACADEMY OF SCIENCES) 25 June 2019. See claims 1-8. | 1-6 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 November 2020** | **20 November 2020** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2020/009823**

**C.      DOCUMENTS CONSIDERED TO BE RELEVANT**

| Category* | Citation of document, with indication, where appropriate, of the relevant passages | Relevant to claim No. |
|---|---|---|
| E | KR 10-2020-0092900 A (DEEP BIO) 04 August 2020. See paragraphs [0034]-[0079]. | 1-6 |

Form PCT/ISA/210 (second sheet) (July 2019)

## INTERNATIONAL SEARCH REPORT
### Information on patent family members

International application No.

**PCT/KR2020/009823**

| Patent document cited in search report | | | Publication date (day/month/year) | Patent family member(s) | | | Publication date (day/month/year) |
|---|---|---|---|---|---|---|---|
| CN | 109934343 | A | 25 June 2019 | WO | 2020-172974 | A1 | 03 September 2020 |
| KR | 10-2020-0092900 | A | 04 August 2020 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALJUNDI ; ALJUNDI ; CHAKRAVARTY ; TUYTELAARS ; ALJUNDI, R. ; CHAKRAVARTY, P. ; TUYTELAARS et al.** *T. Expert gate: Lifelong learning with a network of experts,* 2017, 3366-3375
- **DE VRIES, H. ; STRUB, F. ; MARY, J. ; LARO-CHELLE, H. ; PIETQUIN, O. ; COURVILLE.** *A. C. Modulating early visual processing by language,* 2017, 6594-6604
- **FERNANDO, C. ; BANARSE, D. ; BLUNDELL, C. ; ZWOLS, Y. ; HA, D. ; RUSU, A. A. ; PRITZEL, A. ; WIERSTRA, D.** PathNet: Evolution channels gradient descent in super neural networks. *arXiv preprint arXiv:1701.08734,* 2017
- **GEPPERTH, A ; KARAOGUZ, C.** A bio-inspired incremental learning architecture for applied perceptual problems. *Cognitive Computation,* 2016, vol. 80 (5), 924-934
- **HE, K. ; ZHANG, X. ; REN, S. ; SUN, J.** *Deep residual learning for image recognition,* 2016, 770-778
- **IOFFE, S. ; SZEGEDY, C.** Batch normalization: Accelerating deep network training by reducing internal covariate shift. *arXiv preprint arXiv:1502.03167,* 2015
- **KAMRA, N. ; GUPTA, U. ; LIU, Y.** Deep generative dual memory network for continual learning. *arXiv preprint arXiv:1710.10368,* 2017
- **KIM, H.-E. ; KIM, S. ; LEE, J.** Keep and learn: Continual learning by constraining the latent space for knowledge preservation in neural networks. *arXiv preprint arXiv:1805.10784,* 2018
- **KIRKPATRICK, J. ; PASCANU, R. ; RABINOWITZ, N. ; VENESS, J. ; DESJARDINS, G. ; RUSU, A. A. ; MILAN, K. ; QUAN, J. ; RAMALHO, T. ; GRAB-SKA-BARWINSKA, A. et al.** Overcoming catastrophic forgetting in neural networks. *Proceedings of the national academy of sciences,* 2017
- **KRIZHEVSKY, A. ; HINTON, G.** *Learning multiple layers of features from tiny images,* 2009
- **LECUN, Y. ; BOTTOU, L. ; BENGIO, Y. ; HAFFNER, P.** Gradient-based learning applied to document recognition. *Proceedings of the IEEE,* 1998, vol. 860 (11), 2278-2324
- **LEE, J. ; YUN, J. ; HWANG, S. ; YANG, E.** Lifelong learning with dynamically expandable networks. *arXiv preprint arXiv:1708.01547,* 2017

- **LEE, S.-W. ; KIM, J.-H. ; JUN, J. ; HA, J.-W. ; ZHANG, B.-T.** *Overcoming catastrophic forgetting by incremental moment matching,* 2017, 4652-4662
- **LIU, X. ; MASANA, M. ; HERRANZ, L. ; VAN DE WEIJER, J. ; LOPEZ, A. M. ; BAGDANOV, A. D.** Rotate your networks: Better weight consolidation and less catastrophic forgetting. *arXiv preprint arXiv:1802.02950,* 2018
- **LI, Z. ; HOIEM, D.** Learning without forgetting. *IEEE Transactions on Pattern Analysis and Machine Intelligence,* 2018, vol. 400 (12), 2935-2947
- **LOPEZ-PAZ, D.** Gradient episodic memory for continual learning. *Advances in Neural Information Processing Systems,* 2017, 6467-6476
- **LUO, J.-H. ; WU, J.** An entropy-based pruning method for cnn compression. *arXiv preprint arXiv:1706.05791,* 2017
- **LUO, J.-H. ; WU, J. ; LIN, W.** *Thinet: A filter level pruning method for deep neural network compression,* 2017, 5068-5076
- **MCCLOSKEY, M. ; COHEN, N. J.** *Catastrophic interference in connectionist networks: The sequential learning problem,* 1989, vol. 24 (0), 109-165
- **MERMILLOD, M. ; BUGAISKA, A. ; BONIN, P.** The stability-plasticity dilemma: Investigating the continuum from catastrophic forgetting to age-limited learning effects. *Frontiers in psychology,* 2013, vol. 4 (0), 504
- **MOLCHANOV, P. ; TYREE, S. ; KARRAS, T. ; AILA, T. ; KAUTZ, J.** Pruning convolutional neural networks for resource efficient inference. *arXiv preprint arXiv:1611.06440,* 2016
- **NGUYEN, C. V. ; LI, Y. ; BUI, T. D. ; TURNER, R. E.** Variational continual learning. *arXiv preprint arXiv:1710.10628,* 2017
- **PARISI, G. I. ; KEMKER, R. ; PART, J. L. ; KANAN, C. ; WERMTER, S.** Continual lifelong learning with neural networks: A review. *arXiv preprint arXiv:1802.07569,* 2018
- **REAL, E. ; AGGARWAL, A. ; HUANG, Y. ; LE, Q. V.** Regularized evolution for image classifier architecture search. *arXiv preprint arXiv:1802.01548,* 2018
- **SALIMANS, T. ; GOODFELLOW, I. ; ZAREMBA, W. ; CHEUNG, V. ; RADFORD, A. ; CHEN, X.** *Improved techniques for training GANs,* 2016, 2234-2242

- **SHIN, H. ; LEE, J. K. ; KIM, J. ; KIM, J.** *Continual learning with deep generative replay,* 2017, 2990-2999
- **SIMONYAN, K. ; ZISSERMAN, A.** Very deep convolutional networks for large-scale image recognition. *arXiv preprint arXiv:1409.1556,* 2014
- **ULYANOV, D. ; VEDALDI, A. ; LEMPITSKY, V.** Instance normalization: The missing ingredient for fast stylization. *arXiv preprint arXiv:1607.08022,* 2016
- **WIKIPEDIA CONTRIBUTORS.** *Error function - Wikipedia, the free encyclopedia,* 2018, https://en.wikipedia.org/wiki/Error_function
- **YU, R. ; LI, A. ; CHEN, C.-F. ; LAI, J.-H. ; MORARIU, V. I. ; HAN, X. ; GAO, M. ; LIN, C.-Y. ; DAVIS, L. S.** *NISP: Pruning networks using neuron importance score propagation,* 2018, 9194-9203
- **ZACARIAS, A. S. ; ALEXANDRE, L. A.** Overcoming catastrophic forgetting in convolutional neural networks by selective network augmentation. *arXiv preprint arXiv:1802.08250,* 2018
- **ZENKE, F. ; POOLE, B. ; GANGULI, S.** Continual learning through synaptic intelligence. *arXiv preprint arXiv:1703.04200,* 2017